# EUROPÄISCHE PATENTSCHRIFT

(11) **EP 3 979 283 B1**
(45) Veröffentlichungstag und Bekanntmachung des Hinweises auf die Patenterteilung: **12.06.2024**
(21) Anmeldenummer: 21209607.7
(22) Anmeldetag: 31.10.2018
(51) Int. Cl.: H01H 9/54, H01H 1/20, H02P 1/26

(54) **MOTORSTARTER, BETRIEBSVERFAHREN, COMPUTERPROGRAMMPRODUKT UND MOTORSTARTERANORDNUNG**
MOTOR STARTER, OPERATING METHOD, COMPUTER PROGRAM PRODUCT AND MOTOR STARTER ASSEMBLY
DÉMARREUR DE MOTEUR, PROCÉDÉ DE FONCTIONNEMENT, PRODUIT-PROGRAMME INFORMATIQUE ET DISPOSITIF DÉMARREUR DE MOTEUR

(30) Priorität: 19.12.2017 DE 102017223250
(43) Veröffentlichungstag der Anmeldung: 06.04.2022
(62) Teilanmeldung aus: 18203618.6
(73) Patentinhaber: Siemens Aktiengesellschaft, 80333 München (DE)
(72) Erfinder: Reichenbach, Norbert, 92224 Amberg (DE); Jonas, Stephan, 92431 Neunburg (DE); Käsbauer, Peter, 92421 Schwandorf (DE)
(74) Vertreter: Siemens Patent Attorneys

(56) Entgegenhaltungen:
- EP-A1- 2 320 535
- DE-A1- 3 137 321
- DE-A1-102013 111 954
- US-A- 4 709 294
- US-A1- 2002 092 756
- US-B1- 6 586 905

## Beschreibung

Die Erfindung betrifft ein Betriebsverfahren für einen Motorstarter für einen Elektromotor.

Aus der Patentschrift US 4,709,294 A ist eine Schaltvorrichtung bekannt, in der parallel zu einem mechanischen Schalter ein Triac angeordnet ist. Die Schaltvorrichtung ist dazu ausgebildet, dass bei einem Betätigen des Schalters zuerst ein Kontakt geschlossen wird, durch den ein Gate des Triacs leitend gestellt wird. Im Laufe einer weiteren Betätigung des Schalters wird dieser selbst geschlossen.

DE 10 2013 111 954 A1 offenbart ein aufsteckbares Modul für ein Schütz, in dem an drei Phasen jeweils ein elektromechanischer Schalter und ein dazu paralleles Thyristorenpaar angeordnet ist. Ein im Wesentlichen analoger Aufbau ist auch aus der Patentschrift US 6,586,905 B1 bekannt.

EP 0 343 390 A2 offenbart einen Motorstarter, der über zwei hintereinandergeschaltete Schütze verfügt. Die Schütze weisen jeweils ein Schaltstück auf, das federgelagert ist und durch einen Magnetantrieb mit zwei gegenüberliegenden Festkontakten verbindbar ist.

Die Druckschrift US 6,586,905 B1 offenbart einen Sanftstarter für einen dreiphasigen Elektromotor, bei dem in jeder Phase ein antiparalleles Thyristorenpaar angeordnet ist. Jedes antiparallele Thyristorenpaar wird von einem elektromechanischen Schalter überbrückt. Mittels einer Erfassungsvorrichtung wird ermittelt, ob ein Stromfluss durch die Phasen im Wesentlichen vollständig durch die elektromechanischen Schalter fließt, und somit die Thyristorenpaare umgeht.

Aus US 3,775,576 A ist eine Betätigung für ein elektrisch angetriebenes Werkzeug bekannt, in dem bei der Betätigung ein Schaltstück mit zwei Festkontakten in Kontakt gebracht wird. Das Schaltstück ist durch eine Feder vorgespannt und wird von der Feder in eine geschlossene Position gedrückt. Das Schaltstück berührt an einem der Feder entgegengesetzten Ende ein Betätigungsstück, das auf einer dem Betätigungsstück zugewandten Seite Ausnehmungen ausweist. Die Ausnehmungen sind dazu ausgebildet, das Schaltstück bei einer Bewegung zu den Festkontakten zu kippen, so dass die Enden des Schaltstücks nacheinander die Festkontakte berühren.

In der Automatisierungstechnik besteht Bedarf an Motorstartern für Elektromotoren, die kompakt sind und in einfacher und wirtschaftlicher Weise herstellbar sind. Der Erfindung liegt die Aufgabe zugrunde, einen Motorstarter bereitzustellen, der zumindest teilweise in den skizzierten Aspekten eine Verbesserung bietet.

Die Aufgabenstellung wird durch den lösungsgemäßen Motorstarter gelöst. Der Motorstarter ist mit einer mehrphasigen Stromversorgung und einem Elektromotor verbunden. Des Weiteren weist der Motorstarter in mindestens einer der stromführenden Phasen einen Halbleiterschalter auf, der dazu ausgebildet ist, den Stromfluss in der entsprechenden Phase zu unterbrechen. Der Halbleiterschalter kann dabei beispielsweise als antiparalleles Thyristorenpaar ausgebildet sein. Parallel zum Halbleiterschalter ist ein elektromechanischer Schalter angeordnet, der auch dazu ausgebildet ist, einen Stromfluss durch die entsprechende Phase zu unterbrechen. Der elektromechanische Schalter und der Halbleiterschalter überbrücken sich gegenseitig, so dass der Stromfluss in der Phase dann unterbrochen ist, wenn der Halbleiterschalter und der elektromechanische Schalter geöffnet sind. Der Halbleiterschalter und der zugehörige elektromechanische Schalter bilden so zusammen eine Bypass-Schaltung.

Der mindestens eine elektromechanische Schalter ist dazu ausgebildet, bei einem Erreichen eines stationären Betriebszustands, insbesondere einem Dauerbetrieb des Elektromotors, den über den Halbleiterschalter fließenden Stromfluss vollständig zu übernehmen und zu führen. Im stationären Betriebszustand wird durch den elektromechanischen Schalter eine geringere Verlustwärme erzeugt als durch den Halbleiterschalter. Dadurch sind große und aufwändige Kühlvorrichtungen für den beschriebenen Motorstarter entbehrlich.

Der mindestens eine elektromechanische Schalter des Motorstarters weist ein Schaltstück auf, das beweglich ausgebildet ist. Der Stromfluss durch den elektromechanischen Schalter ist herstellbar, indem das Schaltstück in eine Position bewegt wird, in der es zwei gegenüberliegende Festkontakte berührt. Eine Unterbrechung des Stromflusses durch das Schaltstück wird eingeleitet, wenn mindestens ein Ende frei vom zugehörigen Festkontakt ist, also die elektrische Kontaktierung nicht mehr vollständig ist.

Lösungsgemäß ist das Schaltstück kippbar ausgebildet. Dadurch ist ein sequentielles Kontaktieren der beiden Festkontakte beim Schließen des elektromechanischen Schalters, und beim Öffnen ein sequentielles Lösen des Schaltstücks von den Festkontakten erzielbar. Wenn bei einer Betätigung des Schaltstücks, insbesondere bei einem Öffnen, das Schaltstück nur noch einen Festkontakt berührt, liegt zwischen dem freien Ende des Schaltstücks und dem entsprechenden Festkontakt eine reduzierte Lichtbogenspannung vor. Unter einer reduzierten Lichtbogenspannung ist dabei eine Lichtbogenspannung zu verstehen, die der einer einzigen Kontaktöffnungsstrecke entspricht. Verglichen mit dem Fall, dass sich beide Enden des Schaltstücks gleichzeitig von ihren Festkontakten lösen, wie es bei einem nicht kippbaren Schaltstück auftreten würde, kann die Lichtbogenspannung gegenüber den im Stand der Technik bekannten Lösungen im Wesentlichen halbiert werden Je höher die auftretende Lichtbogenspannung ist, umso höher ist die Kommutierungsgeschwindigkeit und entsprechend niedriger die Kommutierungsdauer. Insbesondere besteht zwischen diesen Größen ein im Wesentlichen linearer Zusammenhang. Die reduzierte Lichtbogenspannung über dem mechanischen Schalter führt somit zu einem reduzierten Stromgradienten im parallelen Halbleiterschalter. Unter einem Stromgradienten ist dabei eine Änderung der vorliegenden Stromstärke bezogen auf die Zeit zu verstehen. Der Stromgradient im Halbleiterschalter ist umso höher, je höher die Lichtbogenspannung ist. Ein verringerter Stromgradient stellt für einen Halbleiterschalter eine reduzierte Beanspruchung dar. Infolgedessen bestehen ein geringerer Verschleiß des Halbleiterschalters und auch ein reduziertes Ausfallrisiko des Halbleiterschalters, also eine erhöhte Zuverlässigkeit und erhöhte Lebensdauer.

Eine weitere Größe, die den Stromgradienten im Halbleiterschalter bestimmt, ist die in der Anordnung aus elektromechanischem Schalter und Halbleiterschalter vorliegende Induktivität, auch Kommutierungsinduktivität genannt. Je höher die Kommutierungsinduktivität ist, umso geringer ist der Stromgradient im Halbleiterschalter. Eine hohe Kommutierungsinduktivität wird durch eine entsprechende hohe Länge der Leitungen erzielt, die den Halbleiterschalter und den elektromechanischen Schalter miteinander verbinden. Das kippbare Schaltstück erlaubt es somit, die Längen der Leitungen, die den Halbleiterschalter und den elektromechanischen Schalter verbinden, zu verringern. Dies wiederum erlaubt es, den Halbleiterschalter und den elektromechanischen Schalter enger aneinander zu platzieren, was wiederum zu einer Material- und Platzersparnis führt. Das kippbare Schaltstück ist in einfacher und wirtschaftlicher Weise herstellbar und bietet ein hohes Maß an Zuverlässigkeit. Diese Lösung erlaubt es damit, die Beanspruchung von Halbleiterschaltern zu verringern und in einfacher Weise platzsparender zu bauen.

In einer Ausführungsform des beschriebenen Motorstarters erfolgt die Reduzierung des Stromgradienten im Halbleiterschalter bei einem Öffnen des elektromechanischen Schalters. Dabei erfolgt der Stromfluss in der entsprechenden Phase zunächst vollständig über den elektromechanischen Schalter. Durch ein Öffnen des elektromechanischen Schalters wird ein Kommutieren auf den Halbleiterschalter eingeleitet. Die bei einem derartigen Kommutieren vorliegende Lichtbogenspannung am ersten Ende des Schaltstücks stellt hierbei eine bestimmende Größe für den im Halbleiterschalter auftretenden Stromgradienten dar. Durch das kippbare Schaltstück erfolgt ein sequentielles Lösen der Enden des Schaltstücks von den zugehörigen Festkontakten mit der Folge einer reduzierten Lichtbogenspannung beim Kommutierungsvorgang. Hierdurch werden erhöhte Stromgradienten vermieden und so die Belastung des Halbleiterschalters in besonderem Maße verringert.

Darüber hinaus kann beim Öffnen des elektromechanischen Schalters zwischen einem Lösen eines ersten Endes vom zugehörigen Festkontakt und einem Lösen eines zweiten Endes vom zugehörigen Festkontakt eine Betätigungsdauer vorliegen. Die Betätigungsdauer übersteigt dabei eine Kommutierungsdauer für den Halbleiterschalter, der parallel zum jeweiligen elektromechanischen Schalter angeordnet ist. Dadurch wird während der Betätigungsdauer und dem Lösen des Endes des Schaltstücks vom zugehörigen Festkontakt die Lichtbogenspannung am zweiten Ende des Schaltstücks im Wesentlichen zu Null. Dadurch wiederum wird ein besonders schonendes Umschalten des Stromflusses vom elektromechanischen Schalter auf den Halbleiterschalter gewährleistet. Insgesamt werden so die Vorteile der Erfindung in besonderem Umfang erzielt.

Ferner kann das Schaltstück kippbar mit einem Schaltstückträger verbunden sein, der einen geneigten Anschlag zum Kippen des Schaltstücks aufweist. Bei einer Betätigung, insbesondere einem Öffnen, wird das Schaltstück durch das geneigte Ende des Schaltstückträgers in eine gekippte Stellung geführt. Alternativ oder ergänzend kann der Schaltstückträger über ein Federelement verfügen, das dazu ausgebildet ist, auf das Schaltstück eine Vorspannung auszuüben. Durch das Federelement ist das Schaltstück dazu ausgebildet, in einem geöffneten Zustand eine gekippte Stellung einzunehmen. Weiter alternativ oder ergänzend kann das Schaltstück auch exzentrisch mit dem Schaltstückträger verbunden sein. Infolge der exzentrischen Verbindung zum Schaltstückträger wird das Schaltstück in einem geöffneten Zustand durch sein Eigengewicht und/oder das Federelement in einer gekippten Stellung gehalten. Stattdessen oder zusätzlich kann der Motorstarter eine Wandung aufweisen, an der ein Vorsprung ausgebildet ist, der bei einer Betätigung auf das kippbare Schaltstück drückt und es so in eine gekippte Stellung bewegt. Dies erfolgt durch ein einseitiges Abstützen des Schaltstücks. Die skizzierten technischen Gestaltungen des Schaltstücks können hierbei einzeln oder in Kombination auftreten. Das kippbare Schaltstück ist dadurch in einer Vielzahl an konstruktiven Variationen verwirklichbar, die in einfacher und kosteneffizienter Weise herstellbar sind. Die beschriebene Lösung kann damit in Form von Nachrüstungen bei einer Vielzahl an existierenden Motorstartern verwirklicht werden.

In einer weiteren Ausführungsform des beschriebenen Motorstarters kann die Betätigungsdauer einer Betätigungsgeschwindigkeit des Schaltstücks und einem maximalen Kippwinkel des Schaltstücks abhängig sein. Je höher der maximale Kippwinkel des Schaltstücks ist, umso länger ist die Betätigungsdauer. Je höher die Betätigungsgeschwindigkeit ist, umso kürzer ist die Betätigungsdauer. Beispielsweise ist durch einen hohen maximalen Kippwinkel auch bei einer hohen Betätigungsgeschwindigkeit eine hohe Betätigungsdauer erreichbar. Dies gewährleistet einen großen konstruktiven Freiraum, in dem die beschriebene Lösung in vorteilhafter Form verwirklicht werden kann. Umfangreiche Modifikationen und Anpassungen, beispielsweise von bestehenden Magnetantrieben in elektromechanischen Schaltern, sind dadurch entbehrlich. Insgesamt ist die beschriebene Lösung damit in einfacher Weise implementierbar.

Des Weiteren können der elektromechanische Schalter und der Halbleiterschalter elektrisch miteinander verbunden sein und so einen Kommutierungskreis bilden. Der Kommutierungskreis weist eine Kommutierungsinduktivität auf, die sich aus den Induktivitäten der Leitungen ergeben, die den Halbleiterschalter mit dem elektromechanischen Schalter verbinden. Die Kommutierungsinduktivität liegt dabei zwischen 20 nH und 150 nH, insbesondere zwischen 30 nH und 120 nH. Eine derartig niedrige Kommutierungsinduktivität geht mit Leitungen mit verringerter Länge einher, so dass der Halbleiterschalter und der elektromechanischen Schalter nah aneinander platzierbar sind. Hierdurch wird ein hohes Maß an Platzersparnis verwirklicht.

In einer weiteren Ausführungsform des beschriebenen Motorstarters ist am ersten und zweiten Ende des Schaltstücks jeweils ein Kontaktstück angeordnet. Dadurch, dass bei einem kippbaren Schaltstück während der Betätigungsdauer die am zweiten Ende vorliegende Lichtbogenspannung im Wesentlichen zu Null wird, kann an diesem Ende der im Stand der Technik übliche silber-basierte Werkstoff durch einen kostengünstigeren und besser verfügbaren Werkstoff ersetzt werden. Das Kontaktstück am zweiten Ende des Schaltstücks kann beispielsweise aus Kupfer oder einer Kupferlegierung hergestellt sein. Des Weiteren kann hierbei die gegenüber den bekannten silberbasierten Werkstoffen erhöhte Leitfähigkeit von Kupfer bzw. Kupferlegierungen vorteilhaft genutzt werden. Darüber hinaus kann das Schaltstück mit dem Kontaktstück am ersten und/oder zweiten Ende einstückig ausgebildet sein. Analog zum Schaltstück kann auch mindestens einer der Festkontakte mit einem entsprechenden Kontaktstück versehen sein und zusätzlich mit diesem einstückig ausgebildet sein.

Die zugrundeliegende Aufgabenstellung wird auch durch das erfindungsgemäße Betriebsverfahren für einen Motorstarter gemäß Anspruch 1 ge-löst. Der Motorstarter ist mit einer mehrphasigen Stromversorgung und einem Elektromotor verbunden. In mindestens einer der stromführenden Phasen sind ein elektromechanischer Schalter und parallel dazu ein Halbleiterschalter angeordnet. Der Halbleiterschalter ist beispielsweise als antiparalleles Thyristorenpaar ausgebildet. Der Halbleiterschalter und der elektromechanische Schalter überbrücken sich gegenseitig. Ein Stromfluss durch die entsprechende Phase wird unterbrochen, wenn der Halbleiterschalter und der elektromechanische Schalter gleichzeitig geöffnet sind. Das erfindungsgemäße Verfahren geht in einem ersten Schritt von einem Betriebszustand aus, in dem der gesamte Stromfluss in der entsprechenden Phase vollständig durch den elektromechanischen Schalter geht. Der Halbleiterschalter ist in diesem Ausgangszustand geöffnet. In einem zweiten Schritt erfolgt ein Schließen des Halbleiterschalters. In einem darauffolgenden dritten Schritt erfolgt ein Öffnen des elektromechanischen Schalters durch eine Betätigung eines Schaltstücks, das zum elektromechanischen Schalter gehört. Durch die Betätigung erfolgen ein Lösen eines ersten Endes des Schaltstücks von einem zugehörigen Festkontakt und ein Lösen eines zweiten Endes des Schaltstücks von einem zugehörigen Festkontakts. Dabei löst sich zuerst das erste Ende des Schaltstücks vom entsprechenden Festkontakt, danach das zweite Ende des Schaltstücks vom zugehörigen Festkontakt. Beim Lösen des ersten und zweiten Endes des Schaltstücks erfolgt eine Kippbewegung des Schaltstücks, die mechanisch durch die Betätigung hervorgerufen wird. Durch die Kippbewegung des Schaltstücks wird ein sequentielles Lösen des ersten und zweiten Endes von den Festkontakten gewährleistet. Infolge der Kippbewegung liegt beim Lösen des ersten und zweiten Endes eine reduzierte Lichtbogenspannung zwischen dem Schaltstück und dem entsprechenden Festkontakt vor. Die reduzierte Lichtbogenspannung gewährleistet einen reduzierten Stromgradienten im parallel angeordneten Halbleiterschalter. Durch den verringerten Stromgradienten im Halbleiterschalter unterliegt dieser einer reduzierten Beanspruchung, und damit einem reduzierten Verschleiß. Damit werden die Zuverlässigkeit und die Lebensdauer des Halbleiterschalters gesteigert.

Erindungsgemäß verstreicht zwischen dem Lösen des ersten Endes des Schaltstücks und dem Lösen des zweiten Endes des Schaltstücks vom jeweiligen Festkontakt eine Betätigungsdauer. Die Betätigungsdauer ist in einer Ausführungsform länger als eine Kommutierungsdauer des entsprechenden Halbleiterschalters. Da nach dem Ende des Kommutierungsvorgangs der Strom vollständig vom Halbleiterschalter geführt wird, ist der mechanische Schalter ab diesem Zeitpunkt stromlos. Dadurch tritt beim Lösen des zweiten Schaltstückendes vom zugehörigen Festkontakt eine Lichtbogenspannung von im Wesentlichen Null auf. Der Stromgradient im Halbleiterschalter beim Lösen des zweiten Endes des Schaltstücks vom Festkontakt wird damit auch minimiert. Dies erlaubt ferner die Verwendung einfacherer und kosteneffizienterer Werkstoff für ein Kontaktstück am zweiten Ende des Schaltstücks. Insbesondere können dadurch silber-basierte Werkstoffe für das Kontaktstück am zweiten Ende ersetzt werden. Das Kontaktstück am zweiten Ende kann beispielsweise aus Kupfer oder einer Kupferlegierung hergestellt sein.

Ferner kann die Betätigungsdauer im beschriebenen Betriebsverfahren unter anderem durch eine Betätigungsgeschwindigkeit eines Schaltstückträgers vorgegeben sein, an dem das Schaltstück kippbar angeordnet ist. Ebenso kann die Betätigungsdauer durch einen maximalen Kippwinkel vorgegeben sein, der durch das Schaltstück einnehmbar ist. Je höher der maximale Kippwinkel ist, umso höher ist die Betätigungsdauer. Je höher die Betätigungsgeschwindigkeit ist, umso kürzer ist die Betätigungsdauer. Das beanspruchte Verfahren kann damit in einem breiten Korridor von Konstruktionsparametern in einfacher Weise umgesetzt werden. Dadurch ist das beanspruchte Verfahren in einer Vielzahl an Motorstartern umsetzbar, und kann beispielsweise auch im Rahmen einer Nachrüstung verwirklicht werden.

Die skizzierte Aufgabenstellung wird auch durch ein Computerprogrammprodukt gelöst, das dazu ausgebildet ist, in einer zum Motorstarter zugeordneten Steuereinheit gespeichert und ausgeführt zu werden. Das Computerprogrammprodukt ist dazu ausgebildet, Betätigungsbefehle an einen Halbleiterschalter und einen elektromechanischen Schalter auszugeben. Das Computerprogrammprodukt kann als Software ausgebildet sein und/oder in festverdrahteter Form vorliegen, beispielsweise als Chip, insbesondere als Application-specific Integrated Circuit, kurz ASIC. Lösungsgemäß ist das Computerprogrammprodukt dazu ausgebildet, zumindest eine Ausführungsform des oben beschriebenen Betriebsverfahrens in einem Motorstarter umzusetzen. Ferner ist das Computerprogrammprodukt dazu ausgebildet, Verfahrensparameter, beispielsweise durch eine Benutzereingabe oder eine übergeordnete Steuerung, wie beispielsweise einer Speicherprogrammierbaren Steuerung, kurz SPS, zu empfangen. Eine weitere übergeordnete Steuerung kann auch ein Parametriergerät sein. Verfahrensparameter sind dabei jegliche einstellbare Größen, die den Ablauf des beanspruchten Betriebsverfahrens beeinflussen. Dies kann beispielsweise eine Stärke eines Anzugsstroms eines Magnetantriebs sein, wodurch die Betätigungsgeschwindigkeit eines Schaltstücks im Motorstarter einstellbar ist. Das Computerprogrammprodukt ist dazu geeignet, in einer im Motorstarter angeordneten internen Steuereinheit oder einer externen übergeordneten Steuereinheit gespeichert und ausgeführt zu werden. Ebenso kann das Computerprogrammprodukt funktional aufgeteilt als System mehrerer Teilprogramme auf der internen Steuereinheit im Motorstarter und der übergeordneten Steuerung gespeichert und ausgeführt zu werden.

Ebenso wird die zugrundeliegende Aufgabenstellung durch die lösungsgemäße Motorstarteranordnung gelöst. Die Motorstarteranordnung umfasst einen Elektromotor, der über einen Motorstarter mit einer mehrphasigen Stromversorgung verbunden ist. Durch den Motorstarter sind ein gezieltes Anlaufen, Abbremsen und ein definierter Dauerbetrieb möglich. Dazu ist der Motorstarter gemäß einer der oben skizzierten Ausführungsformen ausgebildet. Die Motostarteranordnung kann zusätzlich eine übergeordnete Steuerung, beispielsweise eine SPS oder ein Parametriergerät, umfassen, die mit einer Steuereinheit des Motorstarters über eine Datenverbindung gekoppelt ist. Eine solche Motorstarteranordnung erlaubt einen dauerhaft zuverlässigen Betrieb des Elektromotors.

Die Erfindung wird im Folgenden anhand von Figuren einzelner Ausführungsformen beschrieben. Die Merkmale der Figuren sind dabei ohne weiteres untereinander kombinierbar. Es zeigen im Einzelnen:
- FIG 1: schematisch den Aufbau einer Ausführungsform der lösungsgemäßen Motorstarteranordnung;
- FIG 2: schematisch den Aufbau einer Ausführungsform einer Bypass-Schaltung im lösungsgemäßen Motorstarter;
- FIG 3: schematisch einen elektromechanischen Schalter in einem ersten Schritt einer Ausführungsform des erfindungsgemäßen Betriebsverfahrens;
- FIG 4: den elektromechanischen Schalter aus FIG 3 zwischen einem zweiten und dritten Schritt des Betriebsverfahrens;
- FIG 5: den elektromechanischen Schalter aus FIG 4 während des dritten Schritts des Betriebsverfahrens;
- FIG 6: den elektromechanischen Schalter aus FIG 5 in einem Endzustand des Betriebsverfahrens;
- FIG 7: schematisch den Ablauf des Betriebsverfahrens gemäß FIG 3 bis FIG 6 in Diagrammen.

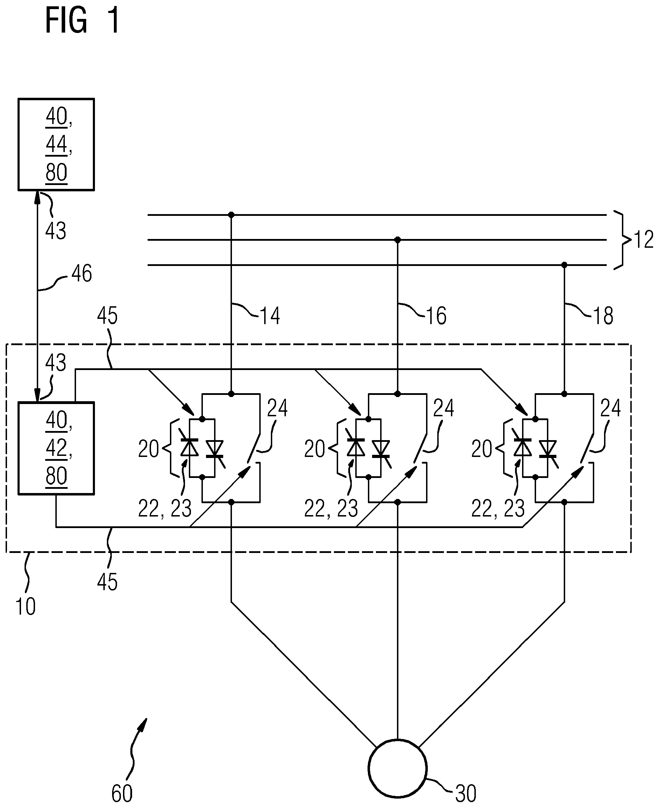

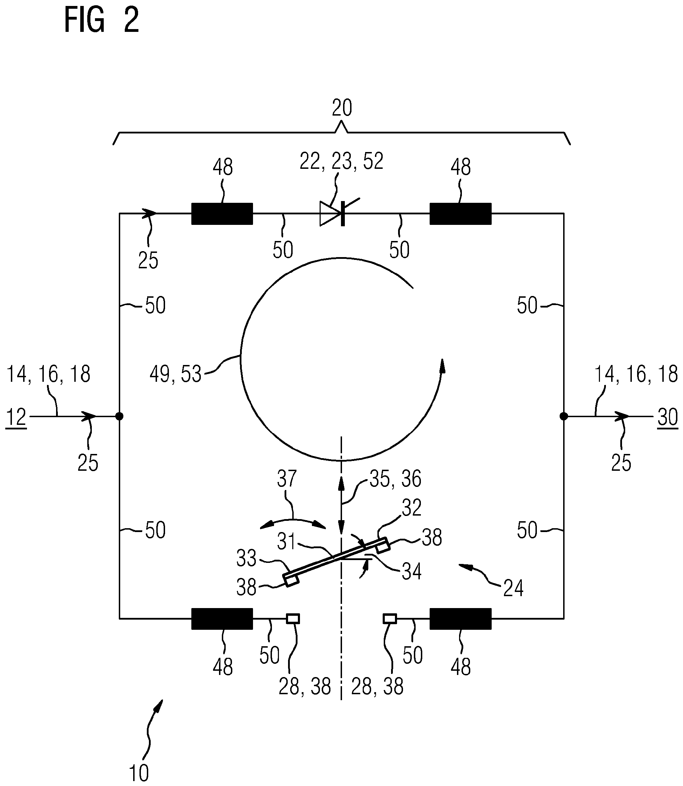

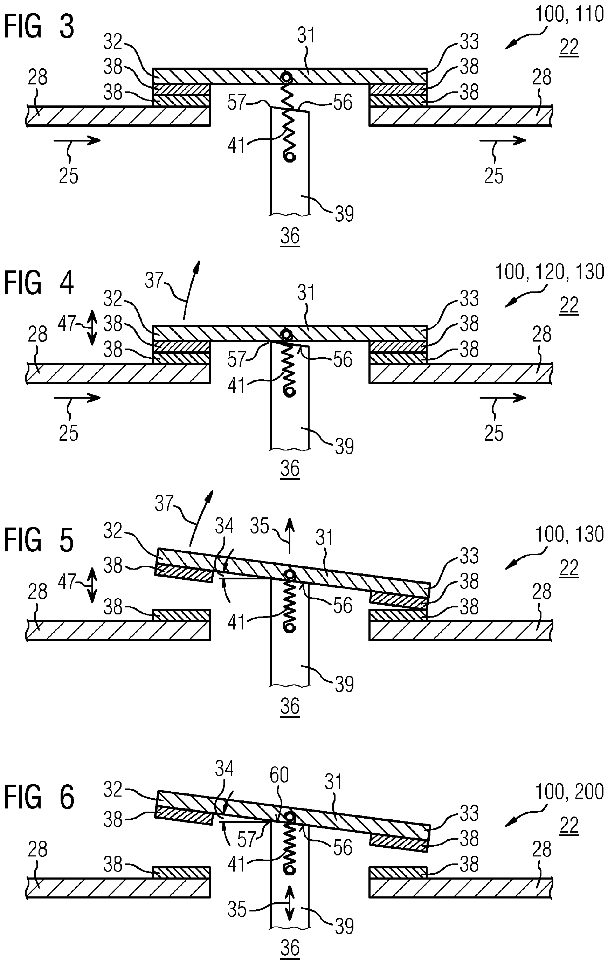

In FIG 1 ist schematisch der Aufbau einer Ausführungsform der lösungsgemäßen Motorstarteranordnung 60 mit einer Ausführungsform des lösungsgemäßen Motorstarters 10 dargestellt. Der Motorstarter 10 ist mit einer Stromversorgung 12 verbunden, durch die ein Elektromotor 30 angetrieben wird. Die Stromversorgung 12 umfasst drei Phasen 14, 16, 18, die jeweils zum Elektromotor 30 führen. In jeder der Phasen 14, 16, 18 ist eine Bypass-Schaltung 20 angeordnet, die jeweils einen Halbleiterschalter 22 und einen elektromechanischen Schalter 24 umfasst. Der Halbleiterschalter 22 ist dabei als ein antiparalleles Paar von Thyristoren 23 ausgebildet. Die Halbleiterschalter 22 sind jeweils parallel zu den elektromechanischen Schaltern 24 angebracht, so dass diese sich gegenseitig überbrücken. Ein Stromfluss durch eine der Phasen 14, 16, 18 ist unterbrochen, wenn der elektromechanische Schalter 24 und der Halbleiterschalter 22 geöffnet sind. Zumindest eine der Bypass-Schaltungen 20 ist dabei gemäß FIG 2 ausgebildet. Der Motorstarter 10 umfasst auch eine Steuereinheit 40, die als interne Steuereinheit 42 ausgebildet ist und dazu geeignet ist, an die Halbleiterschalter 22 und die elektromechanischen Schalter 24 Betätigungsbefehle 45 auszugeben. Die Betätigungsbefehle 45 an die Thyristoren 23 des Halbleiterschalters 22 sind als Zündbefehle ausgebildet, durch die der entsprechende Thyristor 23 bis zum nächsten Spannungsnulldurchgang der entsprechenden Phase 14, 16, 18 leitend gestellt wird. Die Steuereinheit 40 und die Halbleiterschalter 22 sind dazu ausgebildet, über eine Phasenanschnittsteuerung den Elektromotor 30 gezielt anlaufen und bremsen zu lassen. In der internen Steuereinheit 42 ist ein Computerprogrammprodukt 80 gespeichert, das im Betrieb des Motorstarters 10 ausgeführt wird. Die interne Steuereinheit 42 verfügt über eine Datenschnittstelle 43, die eine Datenverbindung 46 zu einer Datenschnittstelle 43 einer übergeordneten Steuerung 44 herstellt. In der übergeordneten Steuerung 44 ist auch ein Computerprogrammprodukt 80 ausführbar abgespeichert. Die Computerprogrammprodukte 80 in der internen Steuereinheit 42 und der übergeordneten Steuerung 44 stehen über die Datenverbindung 46 im Betrieb des Motorstarters 10 in kommunikativer Verbindung. Der Betrieb des Motorstarters 10 wird durch das Zusammenwirken der Computerprogrammprodukte 80 in der internen Steuereinheit 40 und der übergeordneten Steuerung 44 gesteuert und/oder geregelt. Die interne Steuereinheit 42 und die übergeordnete Steuerung 40 wirken somit wie eine Steuereinheit 40 zusammen. Dadurch wird ein Betriebsverfahren 100, wie in FIG 3, FIG 4 und FIG 5 skizziert, verwirklicht.

In FIG 2 ist schematisch der Aufbau einer Bypass-Schaltung 20 dargestellt, die mit einer stromführenden Phase 14, 16, 18 verbunden ist und eine Verbindung zwischen einer Stromversorgung 12 und einem Elektromotor 30 herstellt. Die Bypass-Schaltung 20 umfasst einen Thyristor 23, der zu einem nicht näher dargestellten Thyristorenpaar gehört, das als Halbleiterschalter 22 dient. Parallel zum Thyristor 23 ist ein elektromechanischer Schalter 24 angeordnet. In Reihe vor und nach dem Halbleiterschalter 22 und dem elektromechanischen Schalter 24 sind Induktivitäten 48 dargestellt, die als Kommutierungsinduktivität 49 zusammenwirken. Damit bildet der Aufbau in FIG 2 einen Kommutierungskreis 53. Die einzelnen Induktivität 48 sind von der Länge der Leiter 50 abhängig, die den Halbleiterschalter 22 und den elektromechanischen Schalter 24 verbinden. Die Kommutierungsinduktivität 49 beeinflusst die Höhe eines Stromgradienten 52 im Halbleiterschalter 22, wenn der Stromfluss 25 durch die Phase 14, 16, 18 vom elektromechanischen Schalter 24 auf den Halbleiterschalter 22 kommutiert wird.

Der elektromechanischen Schalter 24 umfasst zwei gegenüberliegende Festkontakte 28, die über ein Schaltstück 31 elektrisch leitend miteinander verbindbar sind. Gemäß FIG 1 befindet sich das Schaltstück 31 in einer Geöffnet-Stellung und nimmt einen maximalen Kippwinkel 34 ein. Das Schaltstück 31 weist ein erstes und ein zweites Ende 32, 33 auf, die jeweils mit einem Kontaktstück 38 besetzt sind. Entsprechend verfügen die Festkontakte 28 auch über Kontaktstücke 38, die im geschlossenen Zustand die Kontaktstücke 38 des Schaltstücks 31 kontaktieren. Das Schaltstück 31 ist über einen nicht näher dargestellten Magnetantrieb 36 entlang einer Betätigungsrichtung 35 beweglich. Das Schaltstück 31 ist kippbar ausgebildet, so dass bei einem Öffnen des elektromechanischen Schalters 24 sich zuerst das erste Ende 32 des Schaltstücks 31 vom zugehörigen Festkontakt 28 löst. Gleichzeitig bleibt das zweite Ende 33 des Schaltstücks 31 zunächst im Kontakt mit seinem zugehörigen Festkontakt 28. Das Schaltstück 31 vollführt beim Öffnen eine Kippbewegung 37, die sich durch die Konstruktion des Schaltstücks 31 ergibt. Unter diesem Aspekt ist das Schaltstück 31 in FIG 3 detaillierter dargestellt.

FIG 3 zeigt schematisch den detaillierteren Aufbau eines elektromechanischen Schalters 24, der in einer Bypass-Schaltung 20 gemäß FIG 2 einsetzbar ist. Der elektromechanische Schalter 24 ist in FIG 3 während eines ersten Schritts 110 gezeigt, der als Ausgangszustand einer Ausführungsform des erfindungsgemäßen Betriebsverfahrens 100 aufzufassen ist. Ein vorliegender Stromfluss 25 durch die zugehörige Phase 14, 16, 18 wird im ersten Schritt 110 im Wesentlichen vollständig durch den elektromechanischen Schalter 24 geführt. Das Schaltstück 31, das an einem ersten und einem zweiten Ende 32, 33 mit Kontaktstücken 38 versehen ist, steht in elektrisch leitendem Kontakt zu Festkontakten 28, die wiederum mit Kontaktstücken 38 versehen sind. Das Schaltstück 31 ist kippbar mit einem Schaltstückträger 39 gekoppelt, der über einen nicht näher dargestellten Magnetantrieb 36 beweglich ist. Ferner ist der Schaltstückträger 39 über ein Federelement 41 mit dem Schaltstück 31 verbunden. Die vom Federelement 41 ausgeübte Federkraft unterstützt zumindest ein bei einer Betätigung vom Schaltstück 31 durchzuführendes Kippen. Der nicht näher dargestellte Magnetantrieb 36 in FIG 3 ist vollständig angezogen, so dass das Federelement 41 durch den Schaltstückträger 39 gespannt wird und das Schaltstück 39 an die Festkontakte 28 angedrückt wird.

In FIG 4 ist der Aufbau des elektromechanischen Schalters 24 in einem Zustand dargestellt, der während des erfindungsgemäßen Betriebsverfahrens 100 im Wesentlichen unmittelbar auf den in FIG 3 gezeigten Zustand folgt. Im erfindungsgemäßen Betriebsverfahren 100 ist dabei ein zweiter Schritt 120 durchgeführt und ein dritter Schritt 130 wird eingeleitet. Der zweite Schritt 120 umfasst ein Schließen des nicht näher dargestellten Halbleiterschalters 22 und der dritte Schritt 130 ein Öffnen des elektromechanischen Schalters 24. Gleiche Bezugszeichen haben in FIG 3 und FIG 4 die gleiche technische Bedeutung. Gemäß FIG 4 wird der Magnetantrieb 36 betätigt, so dass der Schaltstückträger 39 am Schaltstück 31 anschlägt. Der Schaltstückträger 39 weist an einem dem Schaltstück 31 zugewandten Ende einen geneigten Anschlag 56 auf. Ein Ende des geneigten Anschlags 56 weist eine Anschlagkante 57 auf die bei der Bewegung entlang der Betätigungsrichtung 35 dazu geeignet ist, eine Kippbewegung 37 des Schaltstücks 31 hervorzurufen. Gemäß FIG 4 steht ein Lösen des ersten Endes 32 des Schaltstücks 31 vom zugehörigen Festkontakt 28 im Wesentlichen unmittelbar bevor.

In FIG 5 ist der elektromechanische Schalter 24 gemäß FIG 3 und FIG 4 während eines dritten Schritts 130 des beanspruchten Betriebsverfahrens 100 dargestellt. Die FIG 3, FIG 4 und FIG 5 sind in gegenseitiger Ergänzung aufzufassen. Gleiche Bezugszeichen haben auch die gleiche technische Bedeutung. Das Schaltstück 31 ist kippbar über den Schaltstückträger 39 mit dem Magnetantrieb 36 gekoppelt, der Bewegung des Schaltstücks 31 entlang einer Betätigungsrichtung 35 hervorruft. Dabei ist das Schaltstück 31 durch das Federelement 41 derart vorgespannt, dass gleichzeitig eine Kippbewegung 37 des Schaltstücks 31 bewirkt wird. Bei der Kippbewegung 37 wird der Kippwinkel 34 vergrößert bis ein maximaler Kippwinkel 34 erreicht ist. An einem ersten Ende 32 des Schaltstücks 31 wird der Kontakt zum Festkontakt 28 zuerst gelöst. Gleichzeitig bleibt das zweite Ende 33 des Schaltstücks in Kontakt mit dem zugehörigen Festkontakt 28. Zwischen dem ersten Ende 32 des Schaltstücks 31 und dem zugehörigen Festkontakt 28 liegt währenddessen eine Lichtbogenspannung 47 vor. Durch das Lösen des Schaltstücks 31 unter Vollführung der Kippbewegung 37 liegt nur an einem, nämlich dem ersten Ende 32 des Schaltstücks 31, eine Lichtbogenspannung 47 an, die eine Kommutierung auf den nicht näher dargestellten parallelen Halbleiterschalter 22 antreibt. Infolge der Kippbewegung liegt somit eine reduzierte Lichtbogenspannung und ein reduzierter Stromgradient 52 im zugeordneten parallelen Halbleiterschalter 22 vor. Im weiteren Verlauf der Bewegung des Schaltstücks 31 entlang der Betätigungsrichtung löst sich auch das zweite Ende 33 des Schaltstücks 31 vom zugehörigen Festkontakt. Da die Stromkommutierung zu diesem Zeitpunkt beendet ist, erfolgt das Öffnen des zweiten Endes immer stromlos und damit lichtbogenfrei. Dies erlaubt es, beim Kontaktstück 38 am zweiten Ende 33 des Schaltstücks 31 einen kostengünstigeren Werkstoff einzusetzen als beim Kontaktstück 38 des ersten Endes 32.

FIG 6 zeigt den elektromechanischen Schalter 24 in einem geöffneten Zustand, der auf den in FIG 5 skizzierten dritten Schritt 130 folgt. Die Bewegung entlang der Betätigungsrichtung 35 ist dabei abgeschlossen und das Schaltstück 31 an beiden Enden 32, 33 von den zugehörigen Festkontakten 28 gelöst. Die Kommutierung auf den nicht näher gezeigten Halbleiterschalter 22 ist abgeschlossen, so dass sich für den elektromechanischen Schalter 24 ein Endzustand 200 für das beanspruchte Betriebsverfahren 100 einstellt.

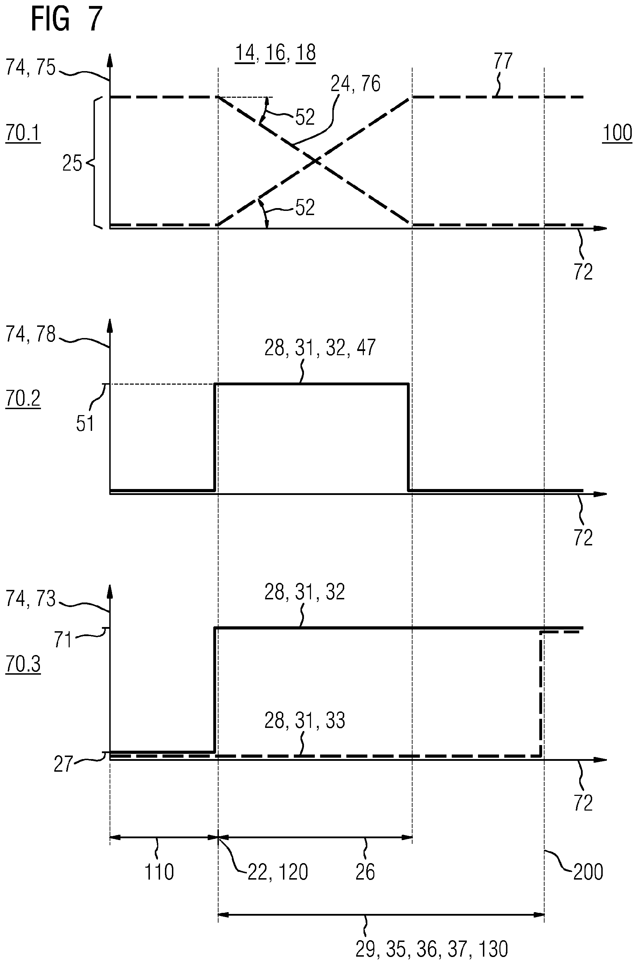

FIG 7 zeigt schematisch den Ablauf einer Ausführungsform des erfindungsgemäßen Betriebsverfahrens 100 in Diagrammen 70.1, 70.2, 70.3. Jedes Diagramm 70.1, 70.2, 70.3 weist eine horizontale Zeitachse 72 auf und eine vertikale Größenachse 74. In einem ersten Diagramm 70.1 sind auf der Größenachse 74 elektrische Stromstärken 75 dargestellt. Das zweite Diagramm 70.2 zeigt an der Größenachse 74 eine Spannung zwischen einem ersten Ende 32 des Schaltstücks 31 und dem zugehörigen Festkontakt 28. Dies stellt eine Lichtbogenspannung 47 dar. Das dritte Diagramm 70.3 zeigt auf der Größenachse 74 einen Kontaktzustand 73 für die beiden Enden 32, 33 des Schaltstücks 31. Dabei ist ein High-Zustand 71 ein geöffneter Zustand, in dem das entsprechende Ende 32, 33 des Schaltstücks 31 frei vom zugehörigen Festkontakt 28 ist. Ein Low-Zustand 27 wiederum stellt einen Zustand dar, in dem das entsprechende Ende 32, 33 des Schaltstücks 31 den entsprechenden Festkontakt 28 berührt.

In einem Ausgangszustand, der einem ersten Schritt 110 des Betriebsverfahrens 100 entspricht, entspricht die Bypass-Stromstärke 76, die im elektromechanischen Schalter 24 vorliegt, einem Stromfluss 25, der in der entsprechenden Phase 14, 16, 18 vorliegt. Der elektromechanische Schalter 24 ist geschlossen und der Halbleiterschalter 22 geöffnet. Die Stromstärke 77 im Halbleiterschalter 22 ist während des ersten Schritts 110 im Wesentlichen Null. Gleichermaßen ist die Lichtbogenspannung 47 zwischen dem ersten Ende 32 des Schaltstücks 31 und dem zugehörigen Festkontakt 28 auch Null. Beide Enden 32, 33 des Schaltstücks 31 sind währenddessen im Kontakt mit dem entsprechenden Festkontakt 28 und weisen als Kontaktzustand 73 einen Low-Zustand 27 auf. Es folgt ein zweiter Schritt 120, in dem der Halbleiterschalter 22 leitend gestellt wird, also geschlossen wird.

In einem dritten Schritt 130 wird durch eine Aktivierung des nicht näher dargestellten Magnetantriebs 36 das Schaltstück 31 entlang einer Betätigungsrichtung 35 bewegt. Das Schaltstück 31 vollführt eine Kippbewegung 37, so dass sich das erste Ende 32 des Schaltstücks 31 vom zugehörigen Festkontakt 28 löst. Gleichzeitig berührt das zweite Ende 33 des Schaltstücks 31 weiterhin den zugehörigen Festkontakt 28. Dementsprechend weist das erste Ende 32 des Schaltstücks 31 einen High-Zustand 71 als Kontaktzustand 73 auf und das zweite Ende 33 einen Low-Zustand 27.

Es erfolgt dabei ein Anstieg der Lichtbogenspannung 47 zwischen dem ersten Ende 32 des Schaltstücks 31 und dem zugehörigen Festkontakt 28. Die Lichtbogenspannung 47 nimmt dabei einen Maximalwert 51 an und dient als Kommutierungsspannung. Durch die Lichtbogenspannung 47 sinkt während des dritten Schritts 130 die Bypass-Stromstärke 76, die im elektromechanischen Schalter 24 vorliegt. Im gleichen Maße steigt die Stromstärke 77 im Halbleiterschalter 22 an. Die Stärke des Anstiegs ist in Diagramm 70.1 als Winkel dargestellt, der dem Stromgradienten 52 im Halbleiterschalter 22 entspricht. Der Rückgang der Bypass-Stromstärke 76 im elektromechanischen Schalter 24 entspricht betragsmäßig dem Stromgradienten 52 im Halbleiterschalter 22. Die Summe aus der Bypass-Stromstärke 76 und der Stromstärke 77 im Halbleiterschalter 22 entspricht während des dritten Schritts 130 dem Stromfluss 25 durch die entsprechende Phase 14, 16, 18.

Nach Ablauf einer Kommutierungsdauer 29 entspricht die Stromstärke 77 im Halbleiterschalter 22 dem Stromfluss 25 durch die entsprechende Phase 14, 16, 18. Die Bypass-Stromstärke 76 beträgt nach Ablauf der Kommutierungsdauer 26 im Wesentlichen Null. Der dritte Schritt 130 endet nach Ablauf einer Betätigungsdauer 29, die die Kommutierungsdauer 26 übersteigt. Nach Ablauf der Betätigungsdauer 29 löst sich auch das zweite Ende 33 des Schaltstücks 31 vom zugehörigen Festkontakt 28 und weist einen High-Zustand 71 als Kontaktzustand 73 auf. Mit dem Lösen des zweiten Endes 33 des Schaltstücks 31 vom entsprechenden Festkontakt 28 ist ein Endzustand 200 des Betriebsverfahrens 100 erreicht.

## Patentansprüche

1. Betriebsverfahren (100) für einen Motorstarter (10), der mit einer mehrphasigen Stromversorgung (12) verbunden ist, der in mindestens einer stromführenden Phase (14, 16, 18) einen elektromechanischen Schalter (24) und einen parallelen Halbleiterschalter (22) aufweist, umfassend die Schritte:
a) Bereitstellen des Motorstarters (10) in einem Betriebszustand, in dem der elektromechanische Schalter (24) geschlossen und der Halbleiterschalter (22) geöffnet ist;
b) Darauffolgendes Schließen des Halbleiterschalters (22);
c) Öffnen des elektromechanischen Schalters (24) durch Lösen eines ersten und eines zweiten Endes (32, 33) eines Schaltstücks (31) von einem zugeordneten Festkontakt (28);
wobei das Öffnen im Schritt c) zur Reduzierung eines Stromgradienten (52) im Halbleiterschalter (52) eine Kippbewegung (37) des Schaltstücks (31) umfasst, wobei unter dem Stromgradienten (52) eine Änderung der vorliegenden Stromstärke (77) bezogen auf die Zeit zu verstehen ist, und wobei im Schritt c) zwischen dem Lösen des ersten und zweiten Endes (32, 33) des Schaltstücks (31) eine Betätigungsdauer (29) verstreicht.

2. Betriebsverfahren (100) nach Anspruch 1, **dadurch gekennzeichnet, dass** die Betätigungsdauer (29) eine Kommutierungsdauer (26) für den Halbleiterschalter (22) übersteigt, wobei nach Ablauf der Kommutierungsdauer (26) die Stromstärke (77) im Halbleiterschalter (22) einem Stromfluss (25) durch die entsprechende Phase (14, 16, 18) entspricht.

3. Betriebsverfahren (100) nach Anspruch 1 oder 2, **dadurch gekennzeichnet, dass** die Betätigungsdauer (29) durch eine Betätigungsgeschwindigkeit (35) eines Schaltstückträgers (39) vorgegeben ist, wobei das Schaltstück (31) kippbar mit dem Schaltstückträger (39) verbunden ist, und/oder die Betätigungsdauer (29) durch einen maximalen Kippwinkel (34) des Schaltstücks (31) vorgegeben ist.

4. Betriebsverfahren (100) nach einem der Ansprüche 1 bis 3, **dadurch gekennzeichnet, dass** nach der Kommutierungsdauer (26) eine Bypass-Stromstärke (76) im elektromechanischen Schalter (24) Null beträgt.

5. Betriebsverfahren (100) nach einem der Ansprüche 1 bis 4, **dadurch gekennzeichnet, dass** das Schaltstück (31) im Schritt c) durch eine Aktivierung eines Magnetantriebs (36) entlang einer Betätigungsrichtung bewegt wird.

6. Betriebsverfahren (100) nach einem der Ansprüche 1 bis 5, **dadurch gekennzeichnet, dass** der elektromechanische Schalter (24) und der Halbleiterschalter (22) einen Kommutierungskreis (53) bilden.

## Claims

1. Operating method (100) for a motor starter (10) that is connected to a multiphase power supply (12) comprising an electromechanical switch (24) and a parallel semiconductor switch (22) in at least one current-carrying phase (14, 16, 18) with the following steps:
a) provision of the motor starter (10) in an operating state in which the electromechanical switch (24) is closed and the semiconductor switch (22) is open;
b) subsequently closing the semiconductor switch (22);
c) opening the electromechanical switch (24) by detaching a first and a second end (32, 33) of a switching piece (31) from an assigned stationary contact (28);
wherein, in order to reduce a current gradient (52) in the semiconductor switch (52), the opening in the step c) includes a tilting movement (37) of the switching piece (31), wherein the current gradient (52) should be understood as a change to the present current intensity (77) based on the time, and wherein, in step c), an actuation period (29) passes between the detachment of the first and second end (32, 33) of the switching piece (31).

2. Operating method (100) according to claim 1, **characterised in that** the actuation period (29) exceeds a commutation period (26) for the semiconductor switch (22), wherein after the expiry of a commutation period (26), the current intensity (77) in the semiconductor switch (22) corresponds to a current flow (25) through the corresponding phase (14, 16, 18).

3. Operating method (100) according to claim 1 or 2, **characterised in that** the actuation period (29) is specified by an actuating velocity (35) of a switching-piece carrier (39), wherein the switching piece (31) is connected tiltably to the switching-piece carrier (39), and/or the actuation period (29) is specified by a maximum tilt angle (34) of the switching piece (31).

4. Operating method (100) according to one of claims 1 to 3, **characterised in that** after the commutation period (26), a bypass-current intensity (76) in the electromechanical switch (24) is zero.

5. Operating method (100) according to one of claims 1 to 4, **characterised in that** in step c), due to activation of the magnetically operated mechanism (36), the switching piece (31) is moved along an actuation direction.

6. Operating method (100) according to one of claims 1 to 5, **characterised in that** the electromechanical switch (24) and the semiconductor switch (22) form a commutation circuit (53).

## Revendications

1. Procédé (100) pour faire fonctionner un démarreur (10) de moteur, qui est relié à une alimentation (12) en courant polyphasé, qui a dans au moins une phase (14, 16, 18) parcourue par le courant un interrupteur (24) électromécanique et un interrupteur (22) à semiconducteur en parallèle, comprenant les stades :
a) on met le démarreur (10) de moteur dans un état de fonctionnement, dans lequel l'interrupteur (24) électromécanique est fermé et l'interrupteur (22) à semiconducteur est ouvert ;
b) on ferme ensuite l'interrupteur (22) à semiconducteur ;
c) on ouvre l'interrupteur (24) électromécanique en séparant une première et une deuxième extrémités (32, 33) d'une pièce (31) de contact d'un contact (28) fixe associé ;
dans lequel l'ouverture dans le stade c) pour la réduction d'un gradient (52) de courant dans l'interrupteur (52) à semiconducteur comprend un mouvement (37) de basculement de la pièce (31) de contact, dans lequel par gradient (52) de courant on entend une variation de l'intensité (77) présente du courant rapporté au temps, dans lequel dans le stade (c) il s'écoule une durée (29) d'actionnement entre la séparation de la première et de la deuxième extrémités (32, 33) de la pièce (31) de contact.

2. Procédé (100) suivant la revendication 1, **caractérisé en ce que** la durée (29) d'actionnement dépasse une durée (26) de commutation de l'interrupteur (22) à semiconducteur, dans lequel après expiration de la durée (26) de commutation, l'intensité (77) du courant dans l'interrupteur (22) à semiconducteur correspond à un flux (25) de courant dans la phase (14, 16, 18) correspondante.

3. Procédé (100) suivant la revendication 1 ou 2, **caractérisé en ce que** la durée (29) d'actionnement est prescrite par une vitesse (35) d'actionnement d'un support (39) de pièce de contact, dans lequel la pièce (31) de contact est reliée avec possibilité de basculer au support (39) de la pièce de contact et/ou la durée (29) d'actionnement est prescrite par un angle (34) de basculement maximum de la pièce (31) de contact.

4. Procédé (100) suivant l'une des revendications 1 à 3, **caractérisé en ce qu'**après la durée (26) de commutation, une intensité (76) du courant de dérivation dans l'interrupteur (24) électromécanique est nulle.

5. Procédé (100) suivant l'une des revendications 1 à 4, **caractérisé en ce que** l'on déplace suivant une direction d'actionnement la pièce (31) de contact dans un stade c) par une activation d'un entraînement (36) magnétique.

6. Procédé (100) suivant l'une des revendications 1 à 5, **caractérisé en ce que** l'interrupteur (24) électromécanique et l'interrupteur (22) à semiconducteur forment un circuit (53) de commutation.
